# EUROPÄISCHE PATENTSCHRIFT

(11) **EP 2 613 922 B1**
(45) Veröffentlichungstag und Bekanntmachung des Hinweises auf die Patenterteilung: **10.02.2016**
(21) Anmeldenummer: 11757257.8
(22) Anmeldetag: 08.09.2011
(51) Int. Cl.: B29C 47/90

(54) **KALIBRIEREINRICHTUNG FÜR EINEN BLASFOLIENSCHLAUCH**
CALIBRATING DEVICE FOR A BLOWN FILM TUBE
DISPOSITIF DE CALIBRAGE D'UN FILM TUBULAIRE SOUFFLÉ

(30) Priorität: 08.09.2010 DE 102010040436
(43) Veröffentlichungstag der Anmeldung: 17.07.2013
(73) Patentinhaber: Windmöller & Hölscher KG, 49525 Lengerich (DE)
(72) Erfinder: GOLDENSTEIN, Jens, 49074 Osnabrück (DE)
(86) Internationale Anmeldenummer: PCT/EP2011/065575
(87) Internationale Veröffentlichungsnummer: WO 2012/032128

(56) Entgegenhaltungen:
- EP-A1- 1 857 255
- DE-U1- 9 214 651
- JP-A- 61 272 128
- US-A- 3 810 725

## Beschreibung

Die Erfindung betrifft eine Kalibriereinrichtung zum Kalibrieren eines mittels einer Blasfolieneinrichtung hergestellten Folienschlauches, mit welcher der Folienschlauch auf einen gewünschten Durchmesser bringbar ist, wobei die Kalibriereinrichtung zumindest ein Folienführungselement umfasst, mit welchem der Folienschlauch führbar ist.

Derartige Kalibriereinrichtungen sind schon lange bekannt. Bei Folienschläuchen, die aus einer kreisförmigen Extrusionsdüse austreten, ist eine Kalibrierung des Schlauches auf einen gewünschten Durchmesser notwendig, um ein Produkt zu erhalten, welches ein gleich bleibendes Format aufweist.

Jedoch sind in der Praxis Folienschläuche gewünscht, deren Durchmesser unterschiedlich sind. Die lässt sich trotz Extrusionsdüsen, deren Austrittsdurchmesser unverändert bleibt, dadurch erreichen, dass die so genannten Folienblasen mit unterschiedlichen Innendrücken beaufschlagt werden, wodurch sich die Folienblasen unterschiedlich weit in radialer Richtung ausdehnen. Selbstverständlich muss die Kalibriereinrichtung an verschiedene Durchmesser der Folienschläuche anpassbar sein. Es werden Kalibriereinrichtungen eingesetzt, die sich mechanisch verstellen lassen.

Die EP 1 965 965 A1 offenbart eine eingangs erwähnte Kalibriereinrichtung zum Kalibrieren eines mittels einer Blasfolieneinrichtung hergestellten Folienschlauches, wobei die Kalibriereinrichtung auf unterschiedliche Durchmesser des Folienschlauches einstellbar ist.

Als nachteilig erweist sich allerdings, dass die Folienführungselemente, die eine solche Kalibriereinrichtung umfasst, eine endliche Größe haben. Daher gibt es gerade bei großen Durchmessern große Bereiche der Außenoberfläche des Folienschlauches, die nicht durch ein Folienführungselement geführt werden. Zudem kann ein Folienführungselement nur für einen einzigen Durchmesser so gekrümmt sein, dass es sich mit seiner Oberfläche vollständig an den Außenumfang des Folienschlauches anlegen lässt. Es tritt noch hinzu, dass die Konstruktion und der Bau solcher Kalibriereinrichtungen aufwändig und damit teuer sind.

Die Druckschrift EP 1 857 255 A1 beschreibt eine Kalibriereinrichtung, bei der das zumindest eine Folienführungselement zumindest ein elastisch verformbares Element umfasst. Das Fluid, mit dem das elastisch verformbare Element beaufschlagt wird, tritt aufgrund einer Porosität durch das elastisch verformbare Element hindurch, so dass dieses Fluid zwischen dieses Element und dem Folienschlauch treten kann. Bei einer gegebenen Porosität funktionieren die Verformung und die Kühlwirkung nicht unabhängig voneinander.

Die DE 92 14 651 U1 offenbart ebenfalls elastisch verformbare Elemente, die jedoch von innen gegen den Folienschlauch gerichtet sind und die Luftführung beeinflussen. Die Verwendung dieses elastisch verformbaren Elements als Folienführungselement wird jedoch nicht vorgeschlagen.

Das Patent US 3 810 725 offenbart ebenfalls von innen an den Folienschlauch anlegbar Elemente, die jedoch nicht elastisch verformbar sind, jedoch teleskopartig verschoben werden können. Die dem Folienschlauch zugewandten Flächen sind perforiert und können somit Kühlluft auf den Folienschlauch geben.

Die Veröffentlichung JP 61 27 21 28 zeigt elastisch verformbare Elemente, die an die Außenseite des Folienschlauchs anlegbar sind. Diese Elemente sind mit einem Fahrradschlauch vergleichbar und werden um ihre Schlauchachse rotiert, so dass der Folienschlauch aufgrund dieser Rotation transportiert wird. Eine nennenswerte Kühlung des Folienschlauches kann nicht stattfinden.

Die Aufgabe der vorliegenden Erfindung ist es daher, eine Kalibriereinrichtung vorzuschlagen, welche die Nachteile des Standes der Technik überwindet.

Die Aufgabe wird ausgehend von einer Kalibriereinrichtung nach dem Oberbegriff des Anspruchs 1 durch die kennzeichnenden Merkmale des Anspruchs 1 gelöst.

Ausgangspunkt ist, dass das Folienführungselement zumindest ein elastisch verformbares Element umfasst. Hierbei bedeutet elastisch verformbar, dass sich die Oberfläche dieses Elements vergrößern oder verkleinern lässt. Auch andere Eigenschaften des Elements lassen sich beeinflussen, wie etwa die Form, die Größe, das Raumvolumen, das von einem Element (beispielsweise einem Schlauch oder einem Reifen) einbeschriebene Volumen und die einbeschriebene Fläche. Insbesondere kann durch die elastische Verformung die Oberflache, welche das Führen des Folienschlauches übernimmt, vergrößert oder verkleinert werden. So kann beispielsweise bei einem größer werdenden Durchmesser des Folienschlauches auch die Oberfläche des elastisch verformbaren Elements des Folienführungselements vergrößert werden, um auch bei einem großen Durchmesser einen möglichst großen Anteil der Außenoberfläche des Folienschlauches führen zu können. Außerdem kann auf diese Weise das Folienführungselement gut an die Krümmung der Außenoberfläche des Folienschlauches angepasst werden. Im Idealfall wird der Folienschlauch kurz nach seinem Eintritt in die Kalibriereinrichtung über eine gewisse Strecke in seiner Transportrichtung vollständig von einem oder mehreren elastisch verformbaren Elementen umgeben.

Erfindungsgemäß ist nun vorgesehen, dass das elastisch verformbares Element mittels einem Gas mit einem Über- oder Unterdruck beaufschlagbar ist. Der Über- oder Unterdruck versteht sich in diesem Fall als Druckdifferenz zum Umgebungsdruck. Ein Beaufschlagen mit einem Über- oder Unterdruck führt dabei zu einer Größenänderung des elastisch verformbaren Elements, bis der Druck des Gases zusammen mit den Rückstellkräften des elastisch verformbaren Elements und der Umgebungsdruck ein Kräftegleichgewicht ausgebildet haben. Dies funktioniert beispielsweise nach Art eines Luftballons.

Weiterhin ist erfindungsgemäß vorgesehen, zwischen dem Folienführungselement und der Außenoberfläche des Folienschlauches eine Flüssigkeit einzuleiten. Diese erzeugt ein Flüssigkeitspolster zwischen den beiden Komponenten, so dass der Folienschlauch mit möglichst geringer Reibung und damit möglichst ohne Schäden an dem Folienführungselement vorbei führbar ist. Ein besonders großer Vorteil des Flüssigkeitspolsters ist allerdings, dass es den Folienschlauch gut kühlen kann. Dazu ist eine Flüssigkeit wegen der größeren Wärmekapazität gegenüber einem Gas vorteilhaft. Wasser ist dabei besonders bevorzugt, da es sich leicht handhaben lässt.

In weiterer Ausgestaltung der Erfindung ist wenigstens eine Kraftbereitstellungseinrichtung vorgesehen, mit welcher sich eine Kraft, die auf das elastisch verformbare Element wirkt, bereitstellen lässt. Damit lässt sich das elastisch verformbare Element auf eine gewünschte Größe oder Form bringen, so dass die oben genannten Vorteile voll zur Geltung kommen.

In einer ersten vorteilhaften Ausführungsform umfasst die Kraftbereitstellungseinrichtung zumindest eine Verstellmechanik, mit welcher die Kraft veränderbar ist. Dabei können verschiedene Bauteile an Punkten oder entlang von Linien oder Flächen auf das elastisch verformbare Element einwirken, also Zug- und/oder Druckkräfte aufbringen.

Auch weitere Kraftbereitstellungseinrichtungen, die auf anderen physikalischen Prinzipien beruhen, können geeignet sein, um das elastisch verformbare Element in seiner Größe und/oder Form zu verändern. So können auf das Element elektrostatische, elektromagnetische und/oder magnetische Kräfte einwirken. So ist beispielsweise denkbar, in das elastisch verformbare Element magnetisierbare Partikel einzuarbeiten oder seine Oberfläche hiermit zu belegen. Ein oder mehrere entsprechend schaltbare und/oder steuerbare Magnete können nun großflächig an dem elastisch verformbaren Element angreifen.

Eine bevorzugte Ausgestaltung der Erfindung beinhaltet, dass das elastisch verformbare Element innerhalb eines Bauteils, welches einen offenen Hohlraum umfasst, angeordnet ist und an den Stirnkanten und/oder im Bereich der Außenoberfläche des Bauteils mit diesem in dichtendem Kontakt steht und dass der Raum zwischen dem rohr- oder zylinderförmigen Element und dem elastisch verformbaren Element mit einen unter Über- oder Unterdruck stehenden Fluid beaufschlagbar ist. Das Element, welches einen offenen Hohlraum umfasst, kann beispielsweise ein offener Zylinder oder ein Rohrstück sein. An den Stirnseiten kann ein solches Bauteil von dieser Form abweichen, um beispielsweise scharfe Kanten zu vermeiden, die das elastisch verformbare Element auf Dauer beschädigen könnten. Die Funktionsweise eines in diesem Absatz beschriebenen Ausführungsbeispiels wird später anhand von Figuren näher erläutert. Der Vorteil einer solchen Anordnung ist, dass sie ohne mechanisch zu bewegende Bauteile auskommt und ihrem Aufbau und in ihrer Funktion sehr einfach ist. Zudem kann mit diesem Ausführungsbeispiel eine Kalibriereinrichtung geschaffen werden, bei der der Folienschlauch nicht nur vollständig umschlossen ist, sondern bei dem die den Folienschlauch führende Innenoberfläche radial stets denselben Abstand zur Mittelachse des Folienschlauches einnimmt. Diese Eigenschaft ist generell bei Kalibriereinrichtungen wünschenswert.

In einer weiteren vorteilhaften Ausgestaltung der Erfindung ist vorgesehen, zwischen dem elastisch verformbaren Element und dem Element, welches einen offenen Hohlraum umfasst, zumindest ein weiteres elastisch verformbares Element anzuordnen. Auf diese Weise kann die Ausformung des erstgenannten elastisch verformbaren Elements in einem weiteren Rahmen beeinflusst werden. Dieses weitere, elastisch verformbare Element umschreibt selbst oder zusammen mit dem Element, welches einen offenen Hohlraum umfasst, einen Raum der ebenfalls mit einem Über- oder Unterdruck beaufschlagbar ist. Dieser Druck kann von dem Druck, mit welchem das (erstgenannte) elastisch verformbare Element beaufschlagbar ist, verschieden sein. Veranschaulicht und näher erläutert wird auch dieses Ausführungsbeispiel anhand von Figuren.

Vorteilhaft ist auch, wenn zumindest Bereiche der genannten, elastisch verformbaren Elemente relativ zu dem Bauteil entlang von Flächen dieses Bauteils bewegbar sind. Das bedeutet, dass die elastisch verformbaren Elemente nicht an dem Bauteil befestigt sein müssen. So ist es denkbar, dass ein elastisch verformbares Element über die Stirnkanten eines rohrartigen Bauteils gezogen wird. Dazu kann eine Verstellmechanik nützlich sein. Mit dieser Lösung kann die Größenänderung des zumindest einen elastisch verformbaren Elements ebenfalls auf einfach Weise erfolgen.

Weitere Ausführungsbeispiele der Erfindung gehen aus der gegenständlichen Beschreibung und den Ansprüchen hervor.
Die einzelnen Figuren zeigen:
- Fig. 1: Prinzipskizze einer Blasfolienextrusionsanlage
- Fig. 2: Draufsicht auf eine Kalibriereinrichtung
- Fig. 3: wie Figur 2, jedoch mit Folienführungselementen, die mit einer größeren Fluidmenge gefüllt sind.
- Fig. 4: Schnitt IV - IV aus der Figur 3
- Fig. 5: eine weitere Ausführungsform einer erfindungsgemäßen Kalibriereinrichtung
- Fig. 6: Ausführungsform gemäß Figur 5, jedoch für Folienschläuche mit größerem Durchmesser
- Fig.7: Kalibriereinrichtung wie Figur 5, jedoch mit einem hierzu unterschiedlich ausgeformten Folienführungselement
- Fig.8: Wie Figur 7, jedoch eingerichtet zur Kalibrierung eines Folienschlauches mit größerem Durchmesser
- Fig. 9: wie Figur 7, jedoch mit zusätzlichem Zugelement
- Fig. 10: wie Figur 8, jedoch mit zusätzlichem Zugelement
- Fig. 11: ein weiteres Ausführungsbeispiel einer erfindungsgemäßen Kalibriereinrichtung
- Fig. 12: wie Figur 11, jedoch mit einem größeren Durchmesser des Folienschlauches
- Fig. 13: wie Figuren 11 und 12, jedoch mit zusätzlichen Schläuchen
- Fig. 14: noch ein weiteres Ausführungsbeispiel der Erfindung
- Fig. 15: wie Figur 14, jedoch zur Kalibrierung eines Folienschlauches größeren Durchmessers
- Fig. 16: ein Ausführungsbeispiel der Erfindung, bei der das Folienführungselement mit einer mechanischen Verstelleinrichtung in dem Durchmesser variiert wird.
- Fig. 17: wie Figur 16, jedoch mit einem Folienführungselement mit größerem Durchmesser
- Fig. 18: wie Figur 11, jedoch mit einer anderen Ausgestaltung einer Flüssigkeitskühlung

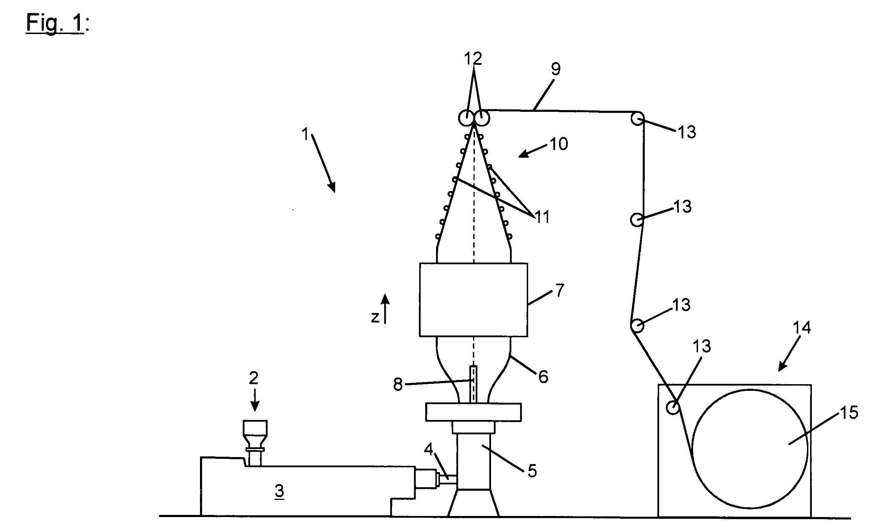

Fig. 1 zeigt eine Prinzipskizze einer bekannten Blasfolienextrusionsanlage 1, welche eine erfindungsgemäße Kalibriereinrichtung umfasst. Den Einfüllstutzen 2 wird ein Kunststoff zugeführt, welcher dann in dem Extruder 3 plastifiziert wird. Die entstandene Masse wird über eine Verbindungsleitung 4 dem Blaskopf 5 zugeführt, mit welchem aus der Masse ein Folienschlauch 9 gebildet wird. Dem Blaskopf 5 können weitere Extruder zugeordnet sein, so dass mehrschichtige Folien herstellbar sind.

Der Folienschlauch 9 verlässt den Blaskopf durch eine in dieser Darstellung nicht sichtbaren Ringdüse in Transportrichtung z.

Der Folienschlauch 9 liegt beim Verlassen des Blaskopfes 5 zunächst als Folienblase 6 vor, in der gegenüber dem Umgebungsdruck ein leicht erhöhter Innendruck vorliegt. Dies wird durch die Zuführung von Druckluft durch den Gebläsestutzen 8 erreicht. Aufgrund des erhöhten Innendrucks weitet sich das noch nicht verfestigte Material des Folienschlauches auf. Letztlich wird auf diese Weise der Durchmesser des fertigen Folienschlauches als auch die Dicke des Folienmaterials eingestellt.

Anschließend gelangt die noch nicht verfestigte Folienblase 6 in die als Kalibrierkorb 7 bezeichnete Kalibriereinrichtung. Hier wird der Durchmesser des Folienschlauches begrenzt. Innerhalb der Kalibriereinrichtung kühlt der Folienschlauch auf eine Temperatur ab, bei der eine nachträgliche Verformung nicht mehr oder nur noch unter Einsatz großer Kräfte möglich ist. Die Position, an der dieser Phasenübergang stattfindet, wird oft als "Frostlinie" bezeichnet.

Innerhalb einer Kalibriereinrichtung des Standes der Technik wird der Folienschlauch von Platten geführt, durch welche Druckluft auf den Folienschlauch gerichtet wird. Diese Druckluft dient einerseits der Kühlung des Folienschlauches und verhindert andererseits eine Berührung der Platten durch den Folienschlauch. In weiteren Kalibriereinrichtungen kann der Folienschlauch auch durch Rollen geführt werden.

Nach dem Verlassen der Kalibriereinrichtung gelangt der Schlauch in eine Flachlegeeinrichtung 10, in welcher der Folienschlauch nahezu oder vollständig zu einer doppellagigen Folienbahn umgeformt wird. Dabei wird der Folienschlauch zwischen Paaren von Führungselementen 11 geführt, die im Verlauf der Transportrichtung z einen immer geringern Abstand voneinander einnehmen. Die Führungselemente können analog zu den in den erfindungsgemäßen Kalibriereinrichtungen enthaltenen Folienführungselementen ausgestaltet sein. Die vollständige Flachlegung erfolgt durch eine Abquetschvorrichtung, die aus einem Paar von Abquetschwalzen 12 besteht. Die Abquetschwalzen 12 verhindern dabei einen Verbleib von Luft innerhalb des Folienschlauchs bei seinem weiteren Transport.

Der Folienschlauch 9 beziehungsweise die daraus entstandene Folienbahn kann nun durch eine nicht gezeigte Reversiervorrichtung geführt werden, oder, wie im Fall der gezeigten Vorrichtung, direkt über Umlenkwalzen 13 einer Wickelvorrichtung 14 zugeführt werden, wo die Folienbahn zu einem Wickel 15 verarbeitet wird.

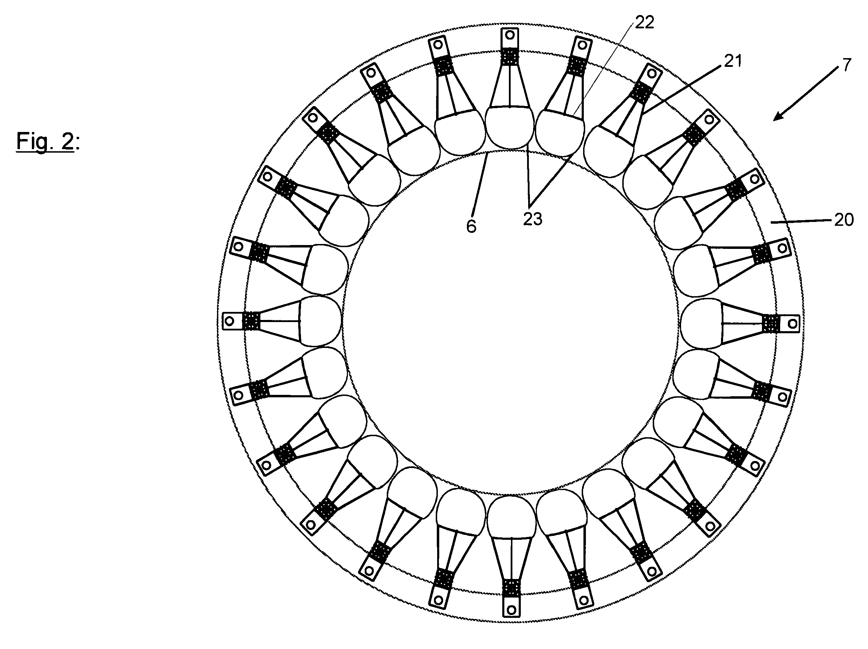

Die Figuren 2 bis 4 zeigen eine erste Ausführungsform einer erfindungsgemäßen Kalibriereinrichtung. Sie basiert auf der in der EP 1 965 965 A1 gezeigten Kalibriereinrichtung, wobei in dieser Figur der dort gezeigte Hebelmechanismus nicht gezeigt ist. Die in den Figuren 2 bis 4 gezeigte Ausführungsform der Erfindung kommt ohne diesen Hebelmechanismus aus, jedoch kann letzterer bei gewünschtem, großem Verstellbereich vorteilhaft sein. Die Beschreibung solcher Hebelmechanismen in der EP 1 965 965 A1 (Seite 5 bis Seite 7) gilt hiermit als in dieser Anmeldung aufgenommen. Jedoch sind auch weitere bekannte Verstellmechanismen mit dem Ausführungsbeispiel der Figuren 2 bis 4 kombinierbar.

Die Figur 2 zeigt nun einen Ring 20, an welchem über den Umfang verteilt mehrere Halter 21 angeordnet sind. Jeder Halter trägt an seiner der Folienblase 6 zugewandten Seite ein Haltestück 22, welches jeweils ein oder mehrere elastisch verformbare Elemente 23 hält.

Das Haltestück 22 kann als Platte ausgestaltet ausgestaltet sein. Jedes Haltestück kann über wenigstens eine Zugangsöffnung zum Inneren des elastisch verformbaren Elements verfügen, so dass das elastisch verformbare Element 23 mit einem Fluid befüllbar ist. Vorzugsweise ist dieses Fluid ein Gas, insbesondere Luft. Entsprechende Fluidzuführ- und -abführleitungen können vorgesehen sein. Die Figur 2 zeigt nun eine Situation, in der die elastisch verformbaren Elemente mit jeweils einer geringen Fluidmenge gefüllt sind, so dass die Elemente 23 eine kleine Ausdehnung haben. Die Elemente begrenzen einen Kreisumfang. Dieser Kreisumfang stellt die Außenwandung der Folienblase 6 dar.

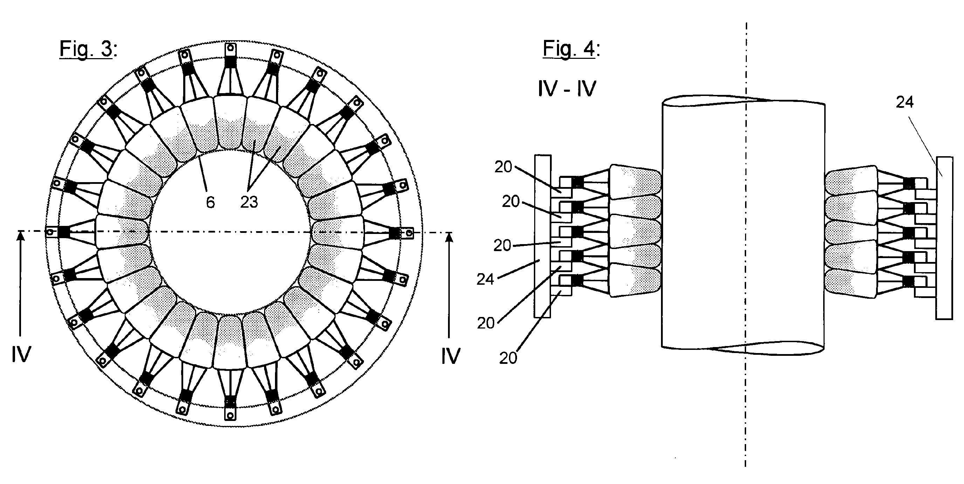

In der Figur 3 sind die Elemente 23 jeweils mit einer größeren Fluidmenge gefüllt, so dass dieses sich im Vergleich zur in der Figur 2 dargestellten Situation weiter ausdehnen. In Umfangsrichtung ist die Ausdehnung jedoch durch benachbarte Elemente 23 begrenzt, so dass die Ausdehnung überwiegend nach innen, also in Richtung auf den Kreismittelpunkt, erfolgt. Der einbeschriebene Kreis wird demnach kleiner. In diesem Fall wird eine Begrenzung für eine Folienblase 6 kleineren Durchmessers geschaffen.

Die Figur 4 zeigt eine Anordnung, in der mehrere, zum Beispiel fünf, Ringe 20 übereinander angeordnet sind. Die Ringe 20 sind an Stützen 24 befestigt, die auf nicht dargestellte Weise an der Maschinenstützkonstruktion und/oder dem Blaskopf 5 befestigt sein können. Auch eine Befestigung direkt auf dem Boden der Werkhalle oder der Hallenkonstruktion ist denkbar.

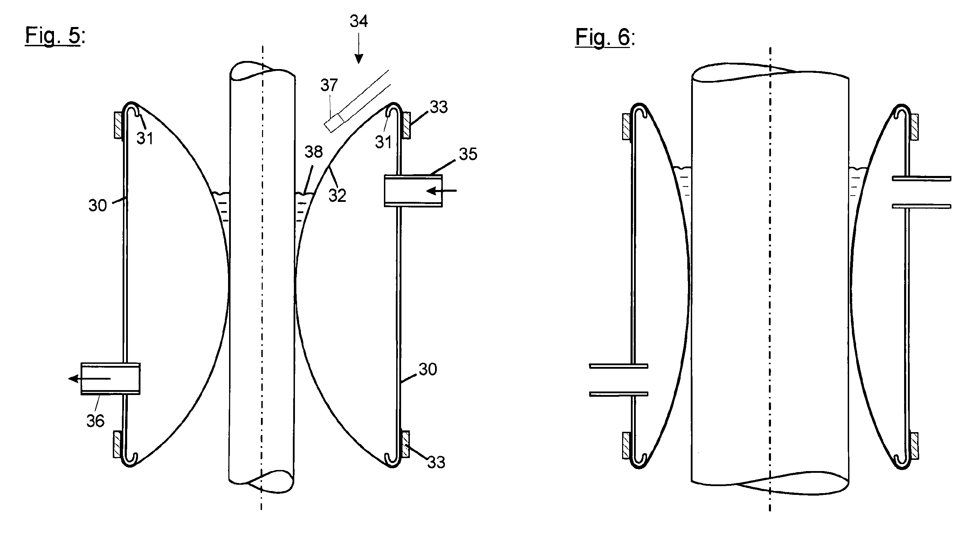

Die Figur 5 stellt eine weitere Ausführungsform der Erfindung dar. Grundelement ist hier eine Hülse 30 großen Durchmessers, die hochfest sein sollte. Diese kann vorzugsweise aus einem Metall oder Metallverbund gefertigt sein, kann aber auch Kunststoff umfassen. Auch weitere Werkstoffe sind denkbar, solange sie im Wesentlichen nicht verformbar und nicht fluiddurchlässig sind. Die Hülse 30 weist vorzugsweise an ihren Stirnseiten nach innen umgebogene Ränder 31 auf.

In die Hülse 30 eingebracht ist ein elastisch verformbares Element 32, welches ebenfalls die Form einer Hülse beziehungsweise eines Rohrs aufweist. Die Enden des Elements 32 sind nun über die umgebogenen Ränder 31 der Hülse 30 gezogen und am Außenumfang der Hülse 30 fixiert. Zu diesem Zweck können Klemmringe 33 oder eine Klemmschelle vorgesehen sein. Auch andere Befestigungsmittel und -arten sind denkbar. So kann etwa eine Klebeverbindung zwischen der Hülse 30 und dem Element 32 vorgesehen sein. Entscheidend bei der Befestigung ist, dass eine fluidundurchlässige Verbindung entsteht. Ein Klemmring, eine Klemmschelle oder ein gleichwertiges Befestigungsmittel hat allerdings den Vorteil der Lösbarkeit für den Fall, dass das Element 32 auszutauschen ist.

Um den Innendurchmesser der Kalibiereinrichtung 34 zu verändern, erfolgt nun eine Beaufschlagung des Raums zwischen der Hülse 30 und dem elastisch verformbaren Elements mit einem Über- oder Unterdruck. Die Begriffe Überdruck und Unterdruck beziehen sich selbstverständlich auf den Umgebungsdruck.

Ob ein Über- oder ein Unterdruck notwendig ist, hängt von der ursprünglichen, unverformten Gestalt des elastisch verformbaren Elements 32 ab. Dieses kann beispielsweise ein hülsenartiges Gebilde sein, dessen Innendurchmesser kleiner als der kleinste, in der Kalibriereinrichtung gewünschte Durchmesser ist. Nach dem Fixieren des Elements 32 hat sich sein Innendurchmesser gegebenenfalls etwas vergrößert, so dass er nun dem kleinsten gewünschten Durchmesser entsprechen kann. Soll der Innendurchmesser für die Kalibrierung einer Folienblase 6 größeren Außendurchmessers angepasst werden, so wird nun der Raum zwischen dem Element 32 und der Hülse 30 mit einem Unterdruck beaufschlagt, also eine gewisse Menge des Fluids entfernt. Dieses Fluid kann wiederum eine Flüssigkeit oder ein Gas wie etwa Luft sein. Durch diesen Unterdruck wird nun das Element 32 nach außen gezogen, also gegenüber seiner ursprünglichen Gestalt aufgeweitet. Für diesen Fall zeigt die Figur 6 die Situation, in der der Raum zwischen dem Element 32 und der Hülse 30 mit einem Unterdruck beaufschlagt wurde.

Das elastisch verformbare Element 32 kann jedoch in seiner ursprünglichen, unverformten Gestalt auch einen Innendurchmesser aufweisen, der dem größten gewünschten Durchmesser der Folienblase 6 entspricht. Um nun den Innendurchmesser des Elements 32 zu verkleinern, kann ein unter Überdruck stehendes Fluid in den Raum zwischen dem Element 32 und der Hülse 30 eingebracht werden. Das elastisch verformbare Element dehnt sich nun nach innen aus, so dass ein kleinerer Innendurchmesser zur Kalibrierung von Folienblasen 6 kleineren Durchmessers angepasst ist. Für dieses Beispiel kann die Figur 6 als Ursprungszustand angesehen werden, und die Figur 5 kann als Beispiel für den mit einem Überdruck beaufschlagten Raum angesehen werden.

Die Figuren 5 und 6 zeigen weiterhin eine Einlassöffnung 35 und eine Auslassöffnung 36. Für das Einbringen eines Über- oder eines Unterdrucks würde eine Öffnung reichen. Zwei Öffnungen können dazu dienen, einen Fluss eines Kühlmittels herzustellen. Damit kann die Wärme der abzukühlenden Folienblase 6 auf effektive Weise abgeführt werden. Das Kühlmittel ist dabei das unter Über- oder Unterdruck stehende Fluid, wobei dieses dann, um den bestehenden Druck aufrechterhalten zu können, in einem geschlossenen Kreislauf geführt werden sollte. Das Fluid kann dann vorteilhafterweise die aufgenommene Wärme über einen Wärmetauscher an die Umgebung oder an eine Kühlflüssigkeit abgeben.

Um eine schnelle Abkühlung der Folienblase 6 zu bewirken, kann das Vorsehen eines Kühlwasserfilms zwischen der Folienblase 6 und dem elastisch verformbaren Element 32 hilfreich sein. Dazu kann ein Wasserzulauf 37 vorgesehen sein, mit welchem Wasser einer bestimmten Menge pro Zeiteinheit zur Verfügung stellbar ist. Es kann sich eine Wassersäule 38 ausbilden, von der Wasser einer definierten Menge nach unten abläuft. Das Wasser dient dabei nicht nur der Kühlung der Folienblase 6, sondern setzt auch die Reibung zwischen der Folie und dem elastisch verformbaren Element 32 herab, so dass die Folie keinen Schaden nimmt. Anstelle von Wasser kann auch eine andere geeignete Flüssigkeit herangezogen werden. Selbstverständlich ist hier auch ein Gas denkbar.

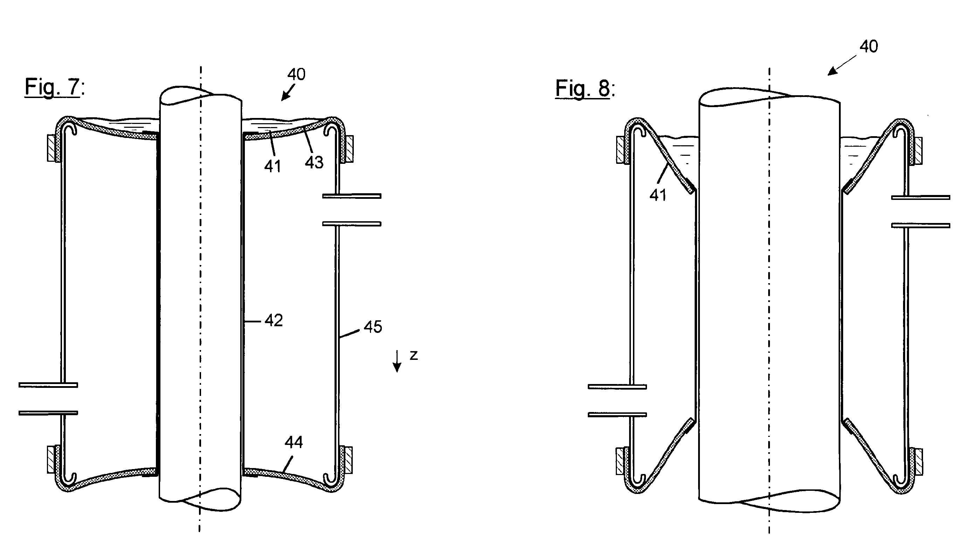

Die Figuren 7 und 8 zeigen eine zur der in den Figuren 5 und 6 gezeigte ähnelnde Kalibriereinrichtung 40, bei der jedoch das elastisch verformbare Element 41 unterschiedlich ausgestaltet ist. Das elastisch verformbare Element 41 umfasst zumindest drei unterschiedliche Abschnitte. Zunächst ist der mittlere Abschnitt 42 zu erwähnen, der in seiner ursprünglichen, unverformten Gestalt wiederum ein rohr- oder hülsenartiges Element darstellt. Die Abschnitte 43 und 44 sind kreisrunde und flache Elemente, die jeweils mittig eine kreisrunde Ausnehmung aufweisen. Durch diese Ausnehmung ist der mittlere Abschnitt 42 hindurch gesteckt. Die Enden des mittleren Abschnitts sind nun nach außen gezogen und auf geeignete Weise auf dem inneren, die jeweilige Ausnehmung umgebenden Rand der Abschnitte 43 und 44 befestigt. Diese Befestigung ist wiederum luftundurchlässig auszuführen, was vorzugsweise mittels einer Klebeverbindung zu erreichen ist. Das elastisch verformbare Element muss jedoch nicht aus mehreren Elementen aufgebaut sein. Es kann auch aus einem Stück oder mehreren Stücken mit unterschiedlichen Wanddicken gefertigt sein. Die Befestigung des die Abschnitte 42, 43 und 44 umfassenden, elastisch verformbaren Elements 41 an der Hülse 45 erfolgt analog zu dem in den Figuren 5 und 6 gezeigten Ausführungsbeispiels. Ein Vorteil der Verwendung von drei Abschnitten liegt darin, dass der mittlere Abschnitt 42 einen größeren Bereich umfasst, in dem der Innendurchmesser in Richtung z konstant ist. Auf diese Weise kann die Folienblase 6 besser auf den gewünschten Durchmesser kalibriert werden. Im Ausführungsbeispiel der Figuren 5 und 6 wird die Kalibrierfläche gegebenenfalls nur durch eine umlaufende Linie gebildet. Es kann vorgesehen sein, dass die Abschnitte 43 und 44 gegenüber dem Abschnitt 42 weniger elastisch sind, so dass sie nur unter größerem Kraftaufwand verformbar sind.

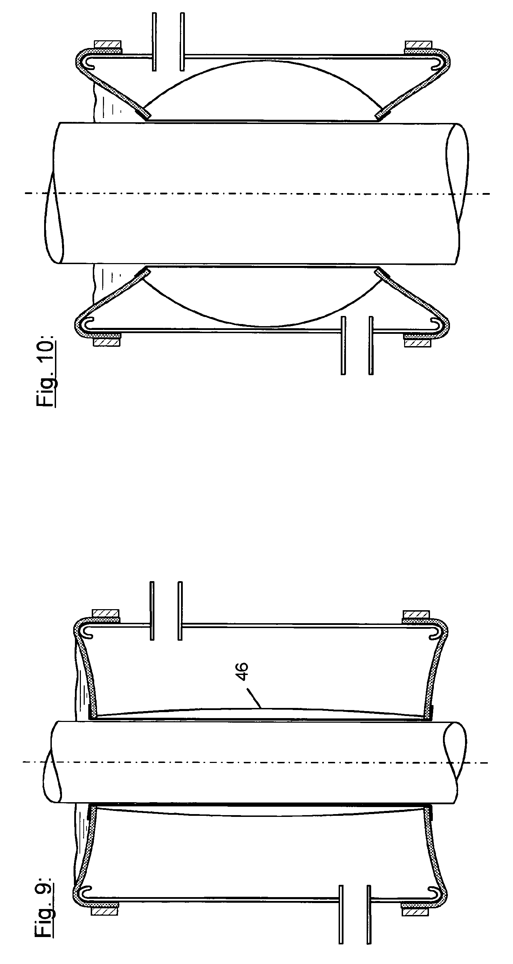

Dennoch ist es möglich, dass sich der Abschnitt 42 und dem Einfluss eines Über- oder Unterdrucks "verbeult", also keinen großen Abschnitt konstanten Durchmessers erzeugt. Um diesen Effekt zu vermeiden, kann gemäß dem Ausführungsbeispiel der Figuren 9 und 10 zumindest ein Zugelement 46 vorgesehen sein. Dieses Zugelement 46 kann in der Nähe des inneren Randes der Abschnitte 43 und 44 an diesen oder an dem Abschnitt 42 angreifen. Wird das Zugelement 46 nun nach außen gezogen, was wiederum unter Einwirkung eines Unterdrucks erfolgen kann, so werden die Abschnitte 43 und 44 zueinander bewegt. Der unter Vorspannung stehende Abschnitt 42 zieht sich nun zusammen, wobei er über seine gesamte Länge einen festen Innendurchmesser einnimmt. Das Zugelement 46 kann selbst ein elastisch verformbares Element sein. Es sind aber auch mehrere Zugelemente denkbar, etwa Bänder oder Ketten, die an den Abschnitten 43 und 44 befestigt sind und die zur Vergrößerung des Kalibrierungsdurchmessers so bewegt werden, dass eine in radialer Richtung nach außen gerichtete Kraftkomponente entsteht.

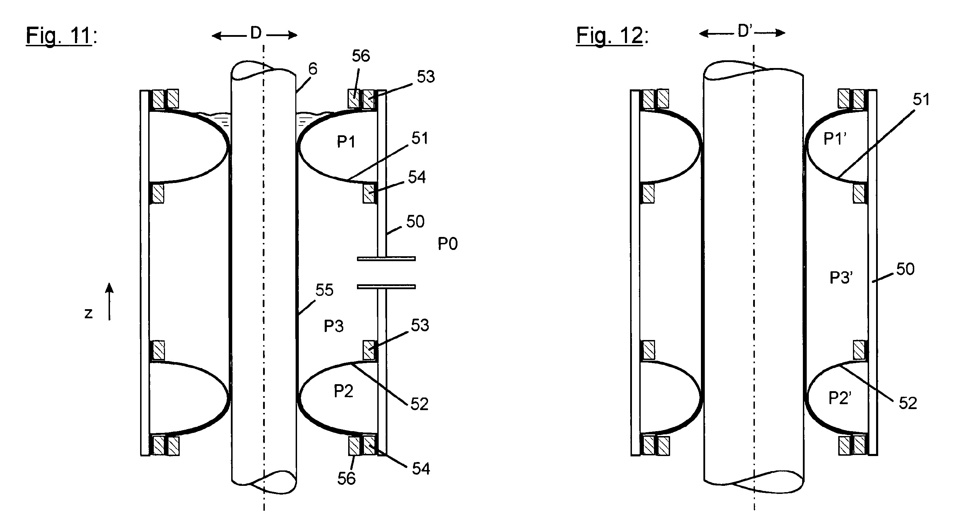

Die Figuren 11 und 12 zeigen ein weiteres Ausführungsbeispiel, welches als auf dem in den Figuren 5 und 6 gezeigten Ausführungsbeispiel basierend angesehen werden kann. Das Rohr 50 umfasst an seinem oberen und seinem unteren Ende jeweils einen ringförmigen Schlauch 51, 52. Diese können als einlagige elastische Elemente ausgestaltet sein, welche über Ringe 53, 54 an der Innenwandung des Rohrs 50 befestigt und gegenüber diesem abgedichtet sind. Die Schläuche 51, 52 können auch als Rundschläuche ausgebildet sein, die gegenüber dem Rohr 50 nicht abgedichtet werden müssen und daher einfach an diesem geeignet befestigt sein müssen. Dazu reicht beispielsweise eine einfache Aufhängung oder eine einfache Klebeverbindung.

Eine elastisch verformbare Hülse 55 ist nun, beispielsweise ebenfalls mit Ringen 56, am oberen und am unteren Ende des Rohrs 50 von innen her an diesem befestigt, so dass die Schläuche 51 und 52 zwischen Hülse 55 und Rohr 50 liegen. Die Hülse 55 bildet demnach in ähnlicher Weise einen Schlauch wie die Schläuche 51 und 52. Die Schläuche 51 und 52 sowie die Hülse 55 zusammen mit dem Rohr 50 grenzen drei voneinander unabhängige, also miteinander nicht verbundene, Räume ab.

Um nun den Kalibrierdurchmesser D verändern zu können, braucht lediglich der Fluiddruck p1 innerhalb des Schlauches 51 und der Fluiddruck p2 des Schlauches 52 verändert zu werden. In einer einfachen Ausführungsform gilt p1 = p2, jedoch können diese Drücke auch unterschiedlich sein, um beispielsweise in Richtung z eine leicht konische Ausformung der Hülse 55 zu erhalten. In einer Abwandlung der erläuterten Ausführungsform könnten die Befestigungen, die hier als Ringe 53 beziehungsweise 54 dargestellt sind, relativ zum Rohr verschiebbar sein. Zusätzlich zur oder statt der Veränderung des Drucks können die Befestigungen verschoben werden, so dass der Kalibrierdurchmesser veränderbar ist. Die Druckvariation innerhalb der Schläuche 51 und 52 zur Änderung des Kalibrierdurchmessers kann dadurch kleiner gehalten werden, was zu einer geringeren mechanischen Belastung des elastischen Materials der Schläuche führt.

Um den Durchmesser der Hülse 55 an verschiedenen Positionen in Richtung z beeinflussen zu können, kann der Druck p3 zwischen dieser 55 und dem Rohr 50 ebenfalls veränderbar sein. Diese Variation kann insbesondere für die Erzielung eines konstanten Durchmessers D gewünscht sein, um so die Folienblase 6 auf einen konstanten Durchmesser kalibrieren zu können.

Die Figur 11 zeigt die beschriebene Ausführungsform der Erfindung, bei der die Kalibriereinrichtung auf einen kleinen Durchmesser D der Folienblase 6 eingestellt ist. Im Schlauch 51 herrscht der Druck p1, im Schlauch 52 der Druck p2 und in der Hülse 55 der Druck p3. Die Figur 12 repräsentiert die gleiche Kalibriereinrichtung, die jedoch auf einen größeren Durchmesser D' eingestellt ist. Im Schlauch 51 herrscht dabei ein Druck p1', der kleiner ist als der Druck p1. Der Druck p2' ist gleichfalls kleiner als der Druck p2. Der Druck p3' kann im Vergleich zum Druck p3 größer oder kleiner sein, je nach Gegebenheiten, also beispielsweise je nach dem Durchmesser der ursprünglichen, unverformten Hülse oder je nach gewünschtem Verlauf der Innenwandung der Hülse in Richtung z.

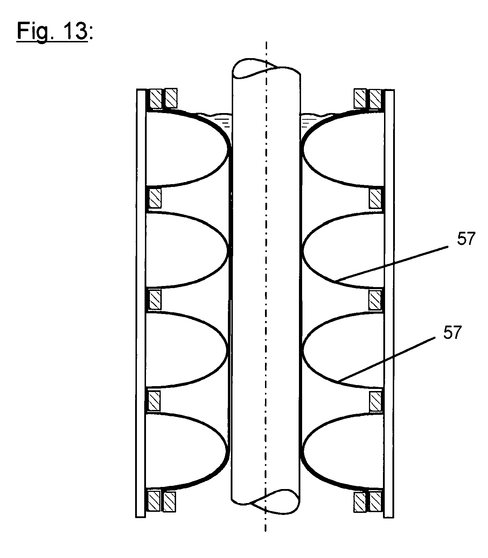

Die Figur 13 zeigt eine Abwandlung des in den Figuren 11 und 12 gezeigten Ausführungsbeispiels der Erfindung. Hier sind zwischen dem Schlauch 51 und dem Schlauch 52 weitere Schläuche angeordnet. In der gezeigten Ausführung sind dies zwei zusätzliche Schläuche 57, wobei auch mehr oder weniger Schläuche vorgesehen sein können.

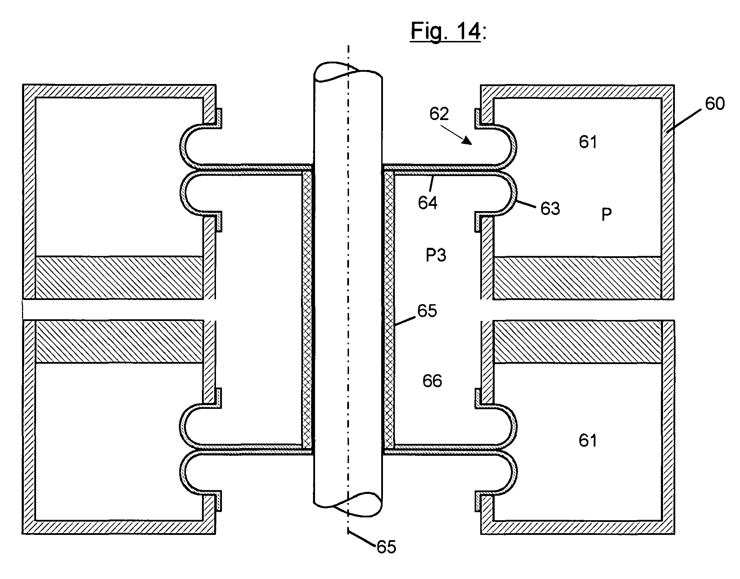

Die Figur 14 zeigt ein weiteres Ausführungsbeispiel der Erfindung, bei dem mehrere, mit unterschiedlichen Drücken beaufschlagbare Räume vorgesehen sind. Diese bestehen nicht, wie die Schläuche 51, 52 und 57 aus den in den Figuren 11 bis 13 gezeigten Ausführungsbeispielen, überwiegend aus elastischem Material, sondern zum Großteil aus festen Elementen 60. Diese festen Elemente umschließen jeweils einen Ringraum 61 (der auch als "Kammer" bezeichnet werden kann), wobei eine ringförmige Öffnung 62 vorgesehen ist, die auf der der Folienblase zugewandten Innenseite des festen Elements 60 angeordnet ist. Die Öffnung ist jedoch durch eine elastisch verformbare Membran 63 verschlossen. An der Membran 63 ist ein Verbindungsstück 64 angeordnet. Membran 63 und Verbindungsstück 64 können dabei einteilig (wie in der Figur 14 gezeigt) oder mehrteilig sein. Die Membran 63 und das Verbindungsstück 64 können einlagig oder mehrlagig sein. Das Verbindungsstück 64 ist beispielsweise scheibenartig ausgeformt, wobei eine mittige und kreisrunde Öffnung, die von einem inneren Rand umgeben ist, vorgesehen ist, durch welche die Folienblase hindurch treten kann.

Durch die Variation des Drucks p in der Kammer 61 wird die Membran 63 in radialer Richtung von der Mittelachse 67 der Anordnung, welche die Mittelachse der Folienblase 6 darstellt, weggezogen oder hinbewegt. Hierdurch wird das Verbindungsstück ebenfalls gedehnt oder die Vorspannung verringert, so dass sich letztendlich der Durchmesser der kreisrunden Öffnung vergrößert oder verkleinert.

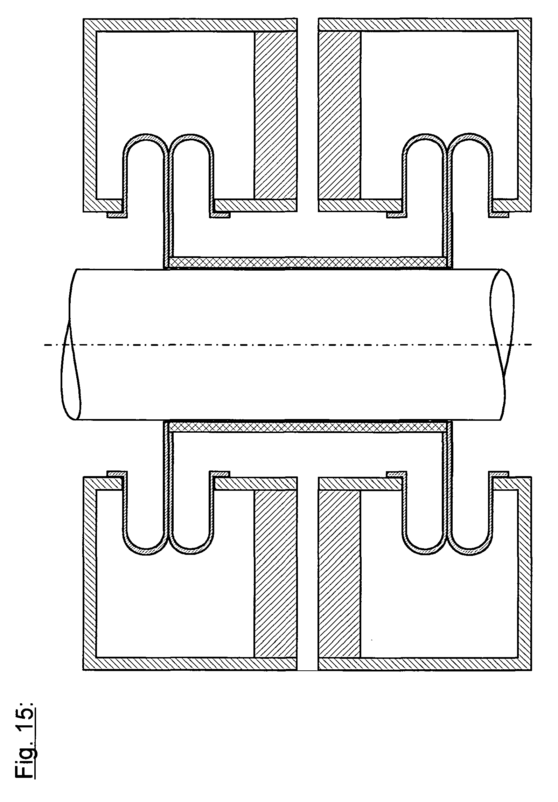

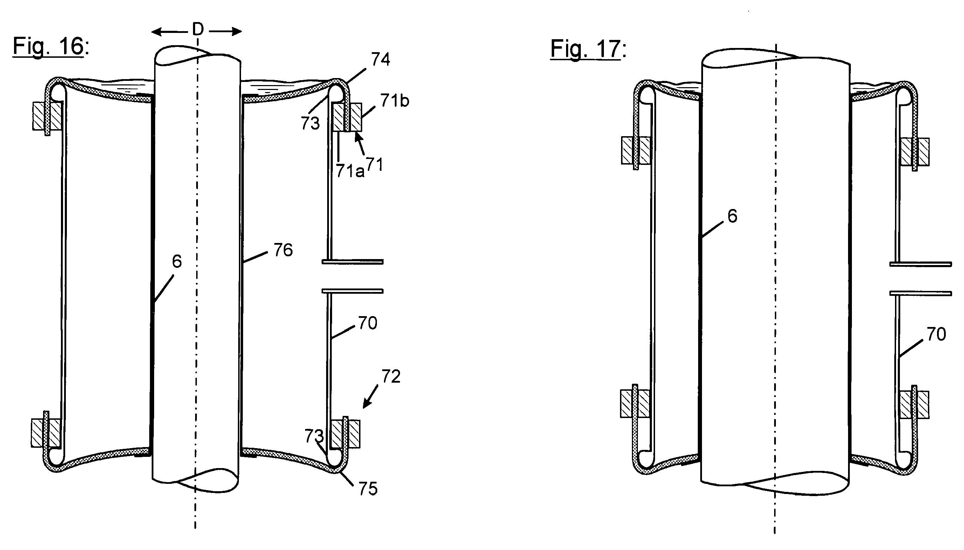

Es ist zumindest ein Ringraum 61 vorgesehen, der mit einer Membran 63 und einem Verbindungsstück 64 versehen sind. An den inneren Rändern der Verbindungsstücke 64 ist eine elastisch verformbare Hülse 65 befestigt. Bevorzugt ist jedes Ende der Hülse 65 am inneren Rand eines Verbindungsstücks angeordnet. Bei einer Veränderung des Durchmessers der kreisrunden Öffnung verändert sich auch der Innendurchmesser der Hülse, so dass der Kalibrierdurchmesser D veränderbar ist. Die Figur 16 zeigt einen gegenüber dem Durchmesser D der Figur 15 veränderten Durchmesser D'. Auf die Angabe der Bezugszeichen wurde in der Figur 16 verzichtet, da diese für die einzelnen Elemente der Figur 15 entnehmbar sind.

Membranen 63, Verbindungsstücke 64, Hülse 65 und die Innenseiten der festen Elemente umgrenzen einen oder mehrere Räume 66, in denen jeweils der Innendruck p3 veränderbar ist. Auf diese Weise kann wiederum, wie im Zusammenhang mit den Figuren 11 bis 13 erläutert, der Innendurchmesser D in Abhängigkeit von der Position in Richtung x verändert werden. Auch hier kann es gewünscht sein, den Durchmesser insbesondere konstant, also unabhängig von der Position in Richtung z, einzustellen.

Anhand der Figuren 2 bis 15 wurden größtenteils Ausführungsbeispiele diskutiert, bei denen eine Veränderung des Kalibrierdurchmessers D im Wesentlichen durch eine Veränderung des Fluiddrucks innerhalb eines zumindest zum Teil von einem elastisch verformbaren Element umschlossenen Raums erfolgt.

Im Folgenden wird ein Ausführungsbeispiel erläutert, das in den Figuren 16 und 17 gezeigt ist. Die Figur 16 ähnelt dabei dem Ausführungsbeispiel gemäß Figur 7. Die Kalibriereinrichtung 7 gemäß Figur 16 umfasst ebenfalls ein Rohr 70, auf dessen Außenumfang zwei Ringe 71 und 72 in oder gegen die Richtung z verschiebbar angeordnet sind. Die Enden des Rohrs 70 umfasst abgerundete Kanten 73, über die elastische Membranen 74, 75 gezogen sind. Die äußeren Ränder der Membranen sind auf geeignete Weise an den Ringen 71 und 72 befestigt. Beispielsweise kann jeder Ring aus zwei Teilen 71 a und 71 b beziehungsweise 72a und 72b bestehen, wobei die Membranen zwischen beiden Teilringen klemmend gehalten werden können.

Die Membranen umfassen wiederum mittige, kreisrunde Öffnungen, durch welche die Folienblase führbar ist. An den die Öffnungen umfassenden Rändern ist eine elastische Hülse 76 befestigt. Zur Veränderung des Kalibrierdurchmessers D können nun die Ringe 71 und 72 relativ zum Rohr 70 verschoben werden. Je nach Verschieberichtung und gegebenenfalls je nach Vorspannung der Membranen 74 und 75 vergrößert oder verkleinert sich der Durchmesser der Öffnungen der Membranen 74 und 75. Der Durchmesser der Hülse 76 ändert sich an diesen Stellen gleichsam. Es kann dabei vorkommen, dass sich der Durchmesser der Hülse 76 nicht gleichmäßig über dessen gesamter Erstreckung in Richtung z ändert. Für diesen Fall ist es vorgesehen, den durch das Rohr 70, die Hülse 76 und die Membranen 74 und 75 begrenzten Raum mit einem Über- oder Unterdruck zu beaufschlagen, so dass die Hülse über ihre Erstreckung denselben Durchmesser D einnimmt.

Zum Bewegen der Ringe 71 und 72 können verschiedene Einrichtungen denkbar sein. Eine Variante ist die Anordnung einer Mehrzahl von Gewindestangen, welche jeweils zwei gegenläufige Gewinde umfassen. Diese Gewinde können in Gewindebohrungen der Ringe eingeschraubt sein. Das Drehen der Gewindestangen, welches händisch oder durch einen Antrieb erfolgen kann, führt dazu, dass die Ringe sich gleichmäßig aufeinander zu bewegen oder voneinander wegbewegen.

In einer weiteren Variante können ein oder mehrere ringförmige Schneckenräder vorgesehen sein, welche das Rohr 70 umgeben und auf welche die Ringe 71 und/oder 72 aufgeschraubt sein können. Eine Drehung des Schneckenrades führt zu einer lateralen Bewegung des Ringes 71 und/oder 72 in axialer Richtung des Rohrs 70.

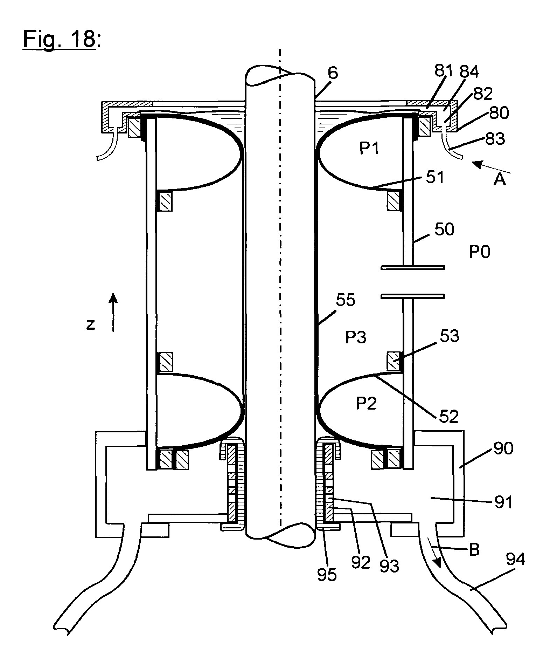

Die Figur 18 zeigt nun eine Ausführungsform, die auf derjenigen aus der Figur 11 beruht, aber mit einem Beispiel für eine Flüssigkeitskühlung versehen ist. Selbstverständlich ist dieses Beispiel auch auf alle anderen Ausführungsformen der Erfindung anwendbar.

Oberhalb des Rohrs 50 ist ein Ring 80 vorgesehen, der an seiner Innenoberfläche eine umlaufende Öffnung 81 umfasst und der eine Ringkammer 84 umschließt. In radialer Richtung gesehen überragt der Ring 80 das Rohr. In diesem das Rohr 50 überragenden Teil ist eine ein umlaufende Vertiefung 82 eingebracht, die als Flüssigkeitsreservoir dienen kann. Die Flüssigkeit wird über Zuführschläuche 83, die vorteilhafterweise gleichmäßig über den Umfang des Rings verteilt sein können, zugeführt, was durch den Pfeil A angedeutet ist. Bei einem ausreichend hohen Flüssigkeitsstand innerhalb der Ringkammer tritt die Flüssigkeit aus der umlaufenden Öffnung 81 heraus und läuft in den Einlaufbereich zwischen der elastisch verformbaren Hülse 55 und der Folienblase 6 hinein. Hier wird ein Flüssigkeitsring ausgebildet. Die Folienblase nimmt einen kleinen Teil der Flüssigkeit mit, wobei letztere die Folienblase kühlt.

Um die Flüssigkeit nach ihrer Kühlwirkung wieder von der Folienblase entfernen zu können, ist unterhalb des Rohrs ein zweiter Ring 90 angeordnet, der ebenfalls eine ringförmige Kammer 91 bildet. Die innere Wand 92 ist mit Öffnungen 93 versehen, durch die das Wasser von der Oberfläche der Folienblase abgesaugt werden kann. Zum Absaugen ist die ringförmige Kammer 91 über einen oder mehrere Schläuche 94 an eine Unterdruckquelle angeschlossen. Die Saugrichtung ist mit dem Pfeil B angedeutet. Damit die Folienblase 6 nun nicht an den Öffnungen 93 beschädigt wird, sind diese mit einem porösen Material 95 abgedeckt, durch welche zwar die Flüssigkeit gelangen kann, welches aber eine Verformung des Materials der Folienblase vermeidet. Als poröses Material kann etwa ein Gewebe, beispielsweise ein textiles Gewebe dienen. Viele andere Materialien, die für die genannte Anwendung geeignete Eigenschaften aufweisen, sind denkbar. Der Ring 90 kann im Bereich der elastisch verformbaren Hülse 55 offen sein, wird aber von der Hülse abgedichtet, um eine gute Saugwirkung der Unterdruckquelle zu erhalten.

## Patentansprüche

1. Kalibriereinrichtung (1) zum Kalibrieren eines mittels einer Blasfolieneinrichtung hergestellten Folienschlauches, mit welcher (1) der Folienschlauch auf einen gewünschten Durchmesser bringbar ist, wobei die Kalibriereinrichtung zumindest ein Folienführungselement umfasst, mit welchem der Folienschlauch führbar ist, wobei das zumindest eine Folienführungselement dem Außenumfang des Folienschlauches zugewandt ist,
**dadurch gekennzeichnet,**
**dass** das Folienführungselement zumindest ein elastisch verformbares Element umfasst, welches mittels einem Gas mit einem Über- oder Unterdruck beaufschlagbar ist und
**dass** zwischen dem elastisch verformbaren Element des Folienführungselements und der Außenoberfläche des Folienschlauchs eine Flüssigkeit einleitbar ist.

2. Kalibriereinrichtung (1) nach Anspruch 1
**dadurch gekennzeichnet, dass**
auf das elastisch verformbares Element mit einer Kraftbereitstellungseinrichtung eine Kraft aufbringbar ist.

3. Kalibriereinrichtung (1) nach dem vorstehenden Anspruch
**dadurch gekennzeichnet, dass**
die Kraftbereitstellungseinrichtung eine Verstellmechanik umfasst, mit welcher die Kraft veränderbar ist.

4. Kalibriereinrichtung (1) nach einem der vorstehenden Ansprüche,
**dadurch gekennzeichnet, dass**
auf das elastisch verformbare Element elektrische, elektromagnetische und/oder magnetische Kräfte einwirkten.

5. Kalibriereinrichtung nach einem der vorstehenden Ansprüche,
**dadurch gekennzeichnet,**
**dass** das elastisch verformbare Element innerhalb eines Bauteils, welches einen offenen Hohlraum umfasst, angeordnet ist und an den Stirnkanten und/oder im Bereich der Außenoberfläche des Bauteils mit diesem in dichtendem Kontakt steht und
**dass** der Raum zwischen dem rohr- oder zylinderförmigen Element und dem elastisch verformbaren Element mit einen unter Über- oder Unterdruck stehenden Fluid beaufschlagbar ist.

6. Kalibriereinrichtung nach dem vorstehenden Anspruch,
**dadurch gekennzeichnet, dass**
zwischen dem elastisch verformbaren Element und dem Element, welches einen offenen Hohlraum umfasst, zumindest ein weiteres elastisch verformbares Element angeordnet ist.

7. Kalibriereinrichtung nach einem der beiden vorstehenden Ansprüche,
**dadurch gekennzeichnet,**
zumindest Bereiche der genannten, elastisch verformbaren Elemente relativ zu dem Bauteil entlang von Flächen dieses Bauteils bewegbar sind.

## Claims

1. Calibrating device (1) for calibrating a film tube which has been produced by means of a blown film device, by way of which (1) the film tube is able to be set to a desired diameter, wherein the calibrating device comprises at least one film guide element by way of which the film tube is guidable, wherein the at least one film guide element faces the external circumference of the film tube, **characterized**
**in that** the film guide element comprises at least one elastically deformable element which is impingeable by means of a gas which is under positive or negative pressure, and
**in that** a liquid is inducible between the elastically deformable element of the film guide element and the external surface of the film tube.

2. Calibrating device (1) according to Claim 1,
**characterized in that**
the elastically deformable element by way of a force-providing device is impingeable with a force.

3. Calibrating device (1) according to the preceding claim,
**characterized in that**
the force-providing device comprises an adjustment mechanism by way of which the force is variable.

4. Calibrating device (1) according to one of the preceding claims,
**characterized in that**
electric, electromagnetic, and/or magnetic forces acted on the elastically deformable element.

5. Calibrating device according to one of the preceding claims,
**characterized**
**in that** the elastically deformable element is disposed within a component which comprises an open cavity, and on the end edges and/or in the region of the external surface of the component is in sealing contact with said component, and
**in that** the space between the tubular or cylindrical element and the elastically deformable element is impingeable with fluid which is under positive or negative pressure.

6. Calibrating device according to the preceding claim,
**characterized in that**
at least one further elastically deformable element is disposed between the elastically deformable element and the element which comprises an open cavity.

7. Calibrating device according to either of the two preceding claims,
**characterized in that**
at least regions of said elastically deformable elements are movable in relation to the component along faces of this component.

## Revendications

1. Dispositif de calibrage (1) pour le calibrage d'un film tubulaire fabriqué au moyen d'un dispositif de soufflage de film, avec lequel (1) le film tubulaire peut être porté à un diamètre désiré, dans lequel le dispositif de calibrage comprend au moins un élément de guidage de fil, avec lequel le film tubulaire peut être guidé, dans lequel ledit au moins un élément de guidage de film est tourné vers la périphérie extérieure du film tubulaire,
**caractérisé en ce que** l'élément de guidage de film comprend au moins un élément élastiquement déformable, qui peut être mis en surpression ou en dépression au moyen d'un gaz, et **en ce qu'**un liquide peut être introduit entre l'élément élastiquement déformable de l'élément de guidage de film et la surface extérieure du film tubulaire.

2. Dispositif de calibrage (1) selon la revendication 1, **caractérisé en ce qu'**une force peut être appliquée à l'élément élastiquement déformable au moyen d'un dispositif de production de force.

3. Dispositif de calibrage (1) selon la revendication précédente, **caractérisé en ce que** le dispositif de production de force comprend un mécanisme de réglage, avec lequel la force peut être modifiée.

4. Dispositif de calibrage (1) selon l'une quelconque des revendications précédentes, **caractérisé en ce que** des forces électriques, électromagnétiques et/ou magnétiques agissent sur l'élément élastiquement déformable.

5. Dispositif de calibrage selon l'une quelconque des revendications précédentes, **caractérisé en ce que** l'élément élastiquement déformable est disposé à l'intérieur d'un composant, qui comprend une cavité ouverte, et est en contact étanche avec ce composant sur les bords frontaux et/ou dans la région de la surface extérieure de celui-ci, et **en ce que** l'espace entre l'élément tubulaire ou cylindrique et l'élément élastiquement déformable peut être alimenté avec un fluide présentant une surpression ou une dépression.

6. Dispositif de calibrage selon la revendication précédente, **caractérisé en ce qu'**au moins un autre élément élastiquement déformable est disposé entre l'élément élastiquement déformable et l'élément, qui comprend une cavité ouverte.

7. Dispositif de calibrage selon l'une des deux revendications précédentes, **caractérisé en ce qu'**au moins des zones dudit élément élastiquement déformable sont déplaçables par rapport au composant le long de faces de ce composant.
